# EUROPÄISCHE PATENTSCHRIFT

(11) **EP 1 840 434 B1**
(45) Veröffentlichungstag und Bekanntmachung des Hinweises auf die Patenterteilung: **23.03.2011**
(21) Anmeldenummer: 07003624.9
(22) Anmeldetag: 22.02.2007
(51) Int. Cl.: F16L 13/14, F16L 37/091, F16L 37/092

(54) **Steckverbinder**
Connector
Connecteur à fiches

(30) Priorität: 30.03.2006 DE 102006015158
(43) Veröffentlichungstag der Anmeldung: 03.10.2007
(73) Patentinhaber: Kaimer GmbH & Co. Holding KG, 45219 Essen (DE)
(72) Erfinder: Herberg, Tom, 02694 Guttau (DE); Kaimer, Bernd, 40545 Düsseldorf (DE)
(74) Vertreter: Polypatent

(56) Entgegenhaltungen:
- EP-A- 0 506 586
- EP-A- 0 879 984
- DE-U1-202005 004 524
- FR-A- 2 665 508

## Beschreibung

Die Erfindung betrifft einen Steckverbinder für Rohrleitungen mit einem ersten und einem zweiten Anschlussende, wobei ein erstes Anschlussende als ein erster Stützkörper ausgebildet ist, der erste Stützkörper mit einem Verschlussring versehen ist, der Verschlussring und der erste Stützkörper einen Ringraum zur Aufnahme eines Rohrendes bilden und Mittel zur klemmenden Festlegung des in den Ringraum eingeschobenen Rohrendes gegen axial wirkende Auszugskräfte vorgesehen sind.

Ein solcher Steckverbinder ist beispielsweise aus der DE 20 2005 004 524 U1 bekannt, der die Merkmale des Oberbegriffs des Anspruchs 1 aufweist. Diese Druckschrift beschreibt einen Steckverbinder mit einem Stützkörper, einem Fixierteil zum Befestigen eines freien Endes einer Rohrleitung auf dem Stützkörper und einem innerhalb des Fixierteils angeordneten Krallring, der an seiner Innenseite Innenkrallen zum Eingriff in die Außenseite der Rohrleitung aufweist. Dieser Steckverbinder besitzt zwei Anschlussenden, von denen ein Anschlussende zum Einschub des Endes einer Rohrleitung ausgebildet ist. Das dem Einschubende gegenüberliegende Anschlussende des Steckverbinders nimmt ebenfalls einen rohrförmigen Körper auf, beispielsweise einen Fittingkörper, der an seinem freien Ende einen Ringflansch zur formschlüssigen Verrastung innerhalb des Steckverbinders aufweist.

Solche Steckverbinder, wie sie beispielsweise auch in der DE 20 2005 004 524 U1 beschrieben sind, werden insbesondere für Warm- und Kaltwasserleitungen für den Sanitär- und Heizungsbereich in der Haustechnik verwendet, wo ein schneller und einfacher Anschluss von Rohrleitungen an Abzweigungen hergestellt werden soll. Häufig werden solche Steckverbinder an Fußbodenheizungsverteilern vorgesehen, wo die Steckverbinder Kunststoffrohre der einzelnen Heizkreise aufnehmen.

Eine solche Anordnung zur Verbindung von Fluidleitungen ist beispielsweise aus der europäischen Patentanmeldung EP 1 099 896 A2 bekannt.

Üblicherweise sind die bekannten Steckverbinder so ausgebildet, dass ein Ende eine glattwandige Rohrleitung in Form eines Kunststoffrohres oder in Form eines Kunststoff-Metall-Verbundrohres aufnehmen kann, hingegen das andere Anschlussende, wie dies in der DE 20 2005 004 524 U1 auch vorgesehen ist, ein für den Steckverbinder passendes Rohrverbindungsteil aufnimmt.

Bei der Anwendung an Heizkreisverteilern ist dies insoweit unproblematisch.

Für die Verbindung von unterschiedlichen Rohrleitungssystemen untereinander, beispielsweise von Metallrohren einerseits und Kunststoff- oder Kunststoff-Metall-Verbundrohren andererseits sind bislang keine zufriedenstellenden Lösungen bekannt geworden, die eine besonders einfache und schnelle Montage ermöglichen.

Zur Verbindung solcher Rohrsysteme werden Adapter verwendet, die beiderseits mit Steckenden ausgebildet sind, wobei jedes Steckende mittels eines Pressfittings an den betreffenden Leitungsabschnitt angeschlossen wird. Die Steckenden sind für die unterschiedlichen Durchmesser und/oder die unterschiedliche Beschaffenheit der zu verpressenden Rohrenden ausgelegt.

Solche Steckadapter finden beispielsweise in der Haustechnik im Bereich Frischwasserversorgung Anwendung, beispielsweise wo Stockwerksverteilungen eines mehrere Stockwerke umfassenden Hauses an die Steigleitungen angeschlossen werden. Mittlerweile sind die Stockwerksverteilungen häufig als Kunststoffrohre ausgebildet, die Steigleitungen bestehen häufig aus Metall oder aus Kunststoff-Metall-Verbundrohren.

Die beidseitige Verpressung der Verbindung ist verhältnismäßig zeitintensiv.

Der Erfindung liegt daher die Aufgabe zugrunde, einen Steckverbinder für Rohrleitungen der eingangs genannten Art insbesondere hinsichtlich des Anwendungsbereichs zu verbessern.

Der Erfindung liegt weiterhin die Aufgabe zugrunde, einen Steckverbinder der eingangs genannten Art im Hinblick auf die Qualität der Klemmverbindung zu verbessern, insbesondere soll ein möglichst konstanter Anpressdruck des freien Endes der eingeschobenen Rohrleitung gegen den Stützkörper gewährleistet werden.

Die Aufgabe wird zunächst gelöst durch einen Steckverbinder für Rohrleitungen mit einem ersten und einem zweiten Anschlussende, wobei ein erstes Anschlussende als ein erster Stützkörper ausgebildet ist, der erste Stützkörper mit einem Verschlussring versehen ist, der Verschlussring und der erste Stützkörper einen Ringraum zur Aufnahme eines Rohrendes bilden und Mittel zur klemmenden Festlegung des in den Ringraum eingeschobenen Rohrendes gegen axial wirkende Auszugkräfte vorgesehen sind. Der Steckverbinder gemäß der Erfindung zeichnet sich dadurch aus, dass ein zweites Anschlussende zur Verpressung mit einem Einsteckende eines Metallrohres oder mit einer muffenartig aufgeweiteten Steckaufnahme eines Metallrohres oder mit einem metallenen Pressfitting ausgebildet ist.

Ein solcher Steckverbinder hat den Vorzug, dass er ohne Weiteres als Adapter zwischen unterschiedlichen Rohrleitungssystemen verwendbar ist, wobei es keiner besonderen Anpassung der anzuschließenden Rohrleitungen bedarf, da der Steckverbinder gemäß der Erfindung ein zur Verpressung vorgesehenes Anschlussende und ein Steckende aufweist. Insbesondere die Ausbildung eines Endes des Adapters gemäß der Erfindung als Steckverbinder vereinfacht und verkürzt die Rohrleitungsmontage erheblich.

Bei einer bevorzugten Variante des Steckverbinders gemäß der Erfindung ist vorgesehen, dass das zweite Anschlussende als zweiter Stützkörper ausgebildet ist, der mit dem ersten Stützkörper einen einstückigen Grundkörper bildet.

Alternativ hierzu kann vorgesehen sein, dass das zweite Anschlussende als Presshülse ausgebildet ist, die mit dem ersten Stützkörper einen einstückigen Grundkörper bildet.

Zweckmäßigerweise besteht der Grundkörper aus Metall, vorzugsweise aus Messing, Edelstahl oder Rotguss.

Bei einer zweckmäßigen Variante des Steckverbinders gemäß der Erfindung weist der Grundkörper einen umlaufenden Kragen auf, der den Verschlussring aufnimmt und als Einschubbegrenzungsanschlag wenigstens des ersten Anschlussendes dient. Dieser Kragen kann beispielsweise an dem zweiten Anschlussende, der als Stützkörper ausgebildet ist, auch als Einschubbegrenzungsanschlag für den zweiten Stützkörper dienen.

Der Verschlussring kann mit dem Grundkörper verschraubt oder verrastet werden.

Im Falle der Verschraubung des Verschlussrings mit dem Grundkörper ist es zweckmäßig, wenn der Verschlussring eine Überwurfverschraubung aufweist, die zumindest teilweise den umlaufenden Kragen des Grundkörpers umschließt.

Als Mittel zur klemmenden Festlegung des in das erste Anschlussende eingeschobenen Rohrendes können beispielsweise mindestens ein Krallenring und wenigstens ein Klemmring vorgesehen sein, die mit der Mantelfläche des eingeschobenen Rohrendes zusammenwirken.

Die Aufgabe wird weiterhin gelöst durch einen Steckverbinder für Rohrleitungen mit einem ersten und einem zweiten Anschlussende, wobei ein erstes Anschlussende als ein erster Stützkörper ausgebildet ist, wobei der erste Stützkörper mit einem Verschlussring versehen ist, der Verschlussring und der erste Stützkörper einen Ringraum zur Aufnahme eines Rohrendes bilden, wobei zur klemmenden Festlegung des in den Ringraum eingeschobenen Rohrendes gegen axial wirkende Auszugskräfte wenigstens ein Krallenring und wenigstens ein Klemmring vorgesehen ist und wobei der Steckverbinder sich dadurch auszeichnet, dass der Klemmring bezüglich des Verschlussringes axial verschiebbar ist und dass der Verschlussring wenigstens einen Rastvorsprung oder-rücksprung aufweist, mit welchem der Klemmring axial festlegbar ist, wenn dieser aufgrund von auf das Rohrende wirkenden Auszugskräfen in axiale Richtung verschoben wird.

Der Klemmring wird somit axial festgelegt, wenn dieser in den konisch zulaufenden Ringspalt zwischen dem Verschlussring und der Mantelfläche des eingeschobenen Rohrendes eingezogen wird.

Vorzugsweise besitzt der Verschlussring einen innen umlaufenden Absatz, der in Auszugsrichtung des eingeschobenen Rohrendes einen Rücksprung bildet, welcher mit radial federnd ausgebildeten Segmenten des Klemmrings bei axialer Verschiebung desselben in Auszugsrichtung als axiale Verriegelung des Klemmrings wirkt.

Eine solche Festlegung des Klemmrings hat sich als wesentlich vorteilhafter als die bisher übliche Verkeilung des Krallenrings, wie sie beispielsweise aus der DE 202005 004 524 U1 bekannt ist, erwiesen. Eine solche Verkeilung mittels Außenkrallen des Krallenrings hat den Nachteil, dass diese sich bei Druckstoßbelastung der Rohrverbindung freiarbeiten kann.

Die Erfindung wird nachstehend anhand eines in den Figuren dargestellten Ausführungsbeispiels erläutert.

Es zeigen:
- Figur 1: eine Schnittansicht eines bekannten Steckverbinders mit einem in diesen eingeschobenen Rohrabschnitt, wobei der Verschlussring mit dem Grundkörper des Steckverbinders verschraubt ist,
- Figur 2: eine alternative Ausgestaltung des Steckverbinders gemäß der Erfindung, bei welcher der Verschlussring in dem Grundkörper des Steckverbinders verrastet ist,

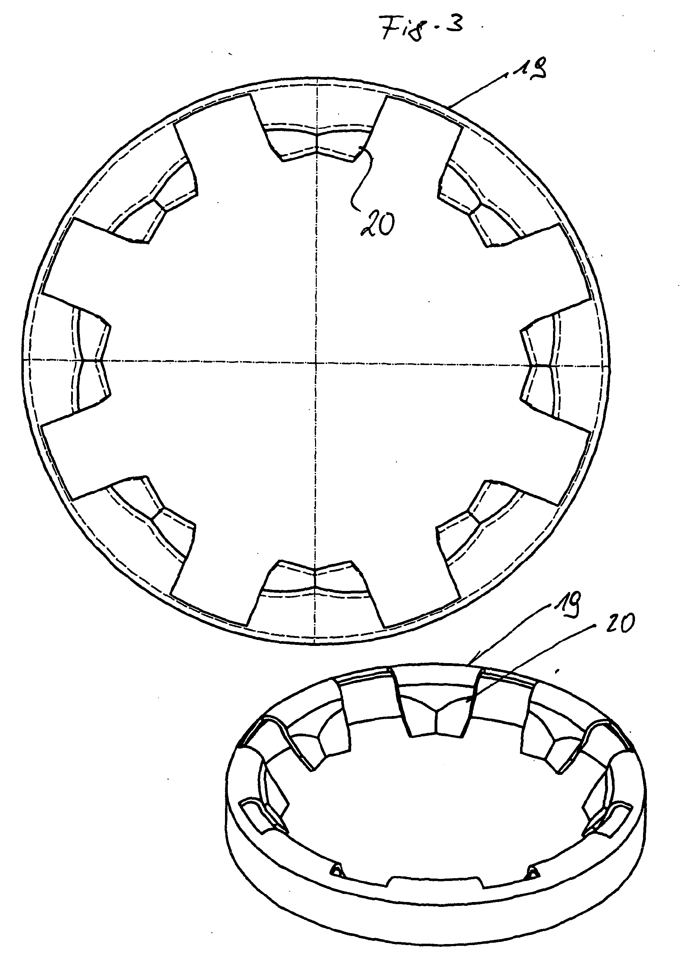

- Figur 3: Ansichten des Krallenrings,

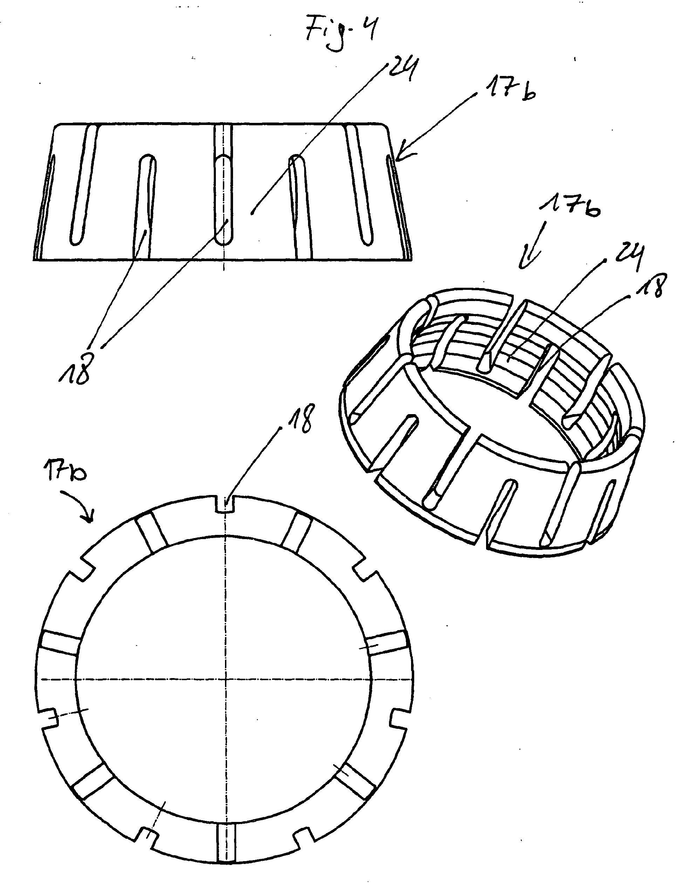

- Figur 4: Ansichten des Klemmrings und

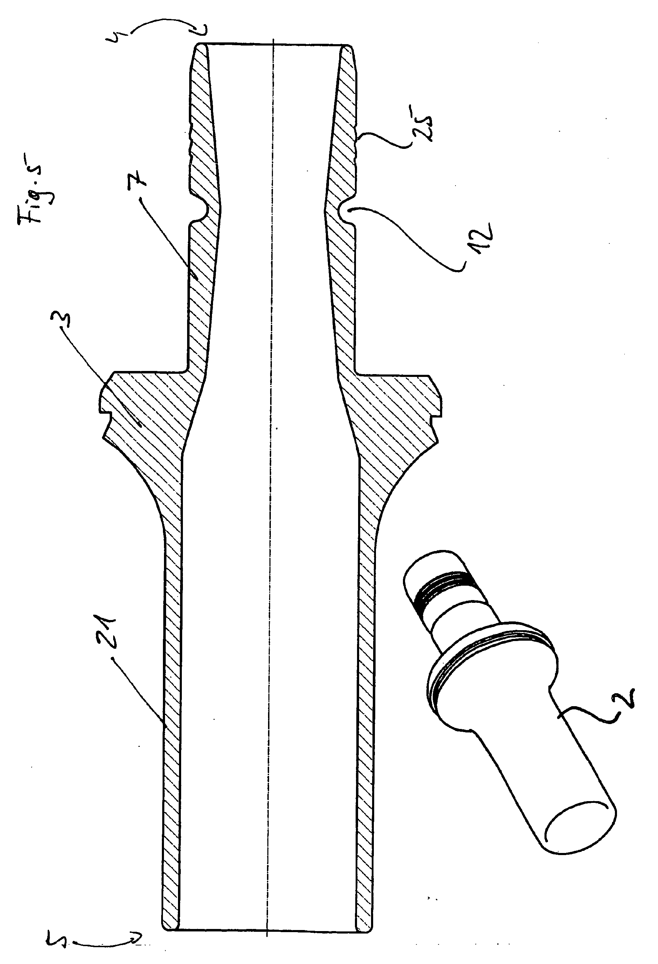

- Figur 5: Ansichten des Grundkörpers.

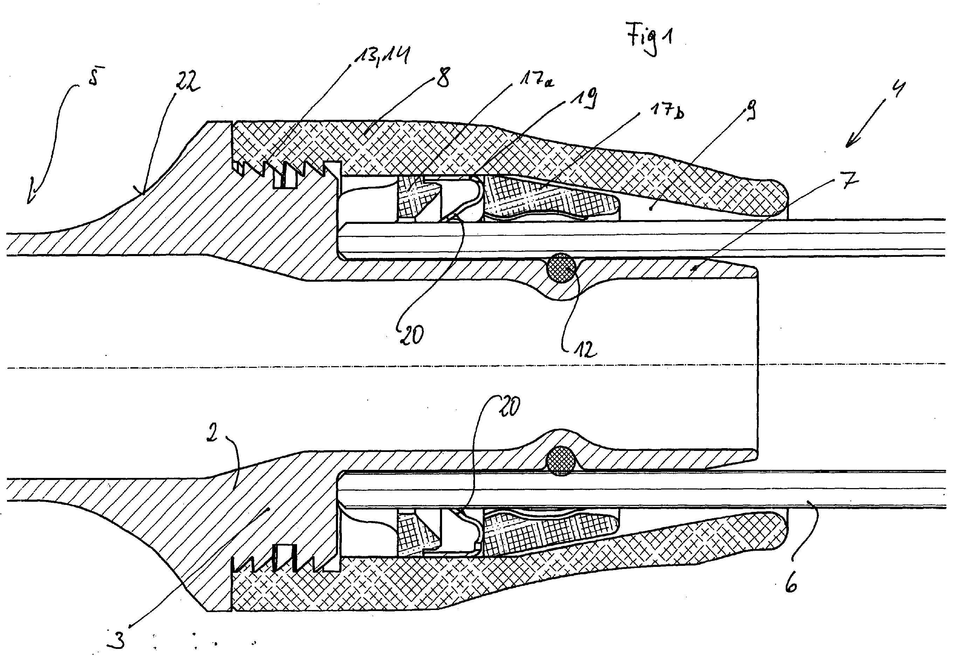

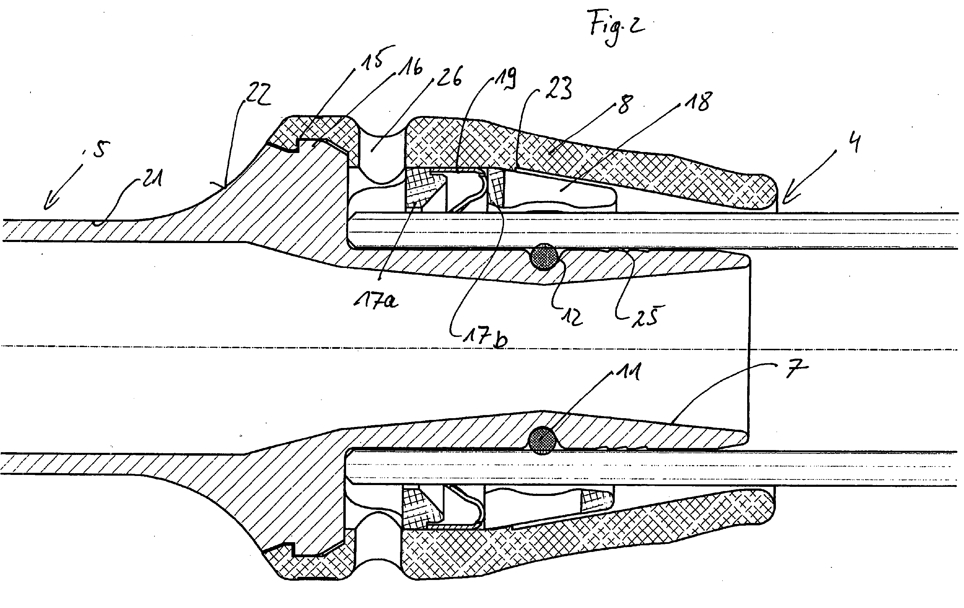

Der in Figur 1 und 2 mit 1 bezeichnete Steckverbinder 1 umfasst einen metallenen Grundkörper 2 mit einer als Kragen 3 ausgebildeten umlaufenden Verdickung. Der Kragen 3 definiert etwa die Mitte des Grundkörpers 3, der Steckverbinder 1 bildet ein erstes Anschlussende 4 und ein zweites Anschlussende 5, wobei das erste Anschlussende 4, wie nachstehend beschrieben als Steckaufnahme für ein Rohr 6 ausgebildet ist.

Hierzu bildet der Grundkörper 2 im Bereich des ersten Anschlussendes 4 einen ersten Stützkörper 7 aus, der mit einem diesen umgebenden Verschlussring 8 einen Ringraum 9 zur Aufnahme des Rohres 6 bildet.

Wie dies beispielsweise aus Figur 1 ersichtlich ist, wird das offene Ende des Rohres 6 in den Ringraum 9 eingeschoben, bis dieses gegen einen von dem Kragen 3 gebildeten Ringflansch 10 anschlägt. Gegen axial entgegengesetzt wirkende Auszugskräfte ist das Rohr 6 mittels des nachstehend noch zu beschreibenden Klemmmechanismus gesichert.

Eine flüssigkeitsdichte Abdichtung des Rohres 6 gegen den ersten Stützkörper 7 erfolgt mittels eines O-Rings 11, der von einer Ringnut 12 des ersten Stützkörpers 7 aufgenommen wird.

Im Falle des in Figur 1 dargestellten Beispiels ist der Verschlussring 8 mit einem Innengewinde 13 versehen, welches mit einem Gewindeabsatz 14 des Kragens 3 eine Überwurfverschraubung bildet.

Im Falle des in Figur 2 gezeigten Ausführungsbeispiels ist der Klemmring 8 an seinem dem Kragen 3 zugewandten Ende mit einer innen umlaufenden Rastnut 15 versehen, die mit einer entsprechend ausgebildeten Rastkontur 16 auf dem Außenumfang des Kragens 3 zusammenwirkt.

In beiden Fällen wird zwischen dem Verschlussring 8 und dem ersten Stützkörper 7 ein Klemmring 17b aufgenommen, dessen Querschnitt etwa konisch ist und etwa an die Querschnittskontur des sich in Richtung des Rohres 6 verjüngenden Ringraums 9 angepasst ist.

Der Klemmring 17b ist mit sich in Längsrichtung erstreckenden Schlitzen 18 versehen, die in bekannter Art und Weise dessen radiale Verformbarkeit ermöglichen. Mit 19 ist ein Krallenring bezeichnet, der zwischen einen Abstandsring 17a und den Klemmring 17b eingefügt ist. Der Krallenring 19 weist radial einwärts gerichtete Federkrallen 20 auf, die sich in bekannter Art und Weise bei Auszug des Rohres 6 aus dem Ringraum 9 in der Mantelfläche des Rohres 6 verkrallen und der Auszugskraft entgegenwirken.

Es ist für den Fachmann selbstverständlich, dass der Abstandsring 17a und der Klemmring 17 b auch einteilig ausgebildet sein können.

Der Verschlussring 8 ist mit einem innen umlaufenden Absatz 23 versehen, der in Auszugsrichtung des Rohres 6 eine Durchmessererweiterung bzw. einen Rücksprung des Verschlussrings 8 bildet. Dieser umlaufende Absatz 23 bewirkt bei axialer Verschiebung des Klemmrings 17b in Auszugsrichtung des Rohres 6, wenn dieser in den konischen Ringspalt zwischen der Mantelfläche des Rohres 6 und dem Verschlussring 8 hineingezogen wird, dass die Segmente 24 des Klemmrings 17b in diesem Bereich ausfedern, so dass der umlaufende Absatz 23 als Anschlag gegen eine Rückstellbewegung des Klemmrings 17b entgegen der Auszugsrichtung des Rohres 6 wirkt und somit der Klemmring unter Spannung bleibt.

Mit 26 ist ein Sichtfenster in dem Verschlussring 8 bezeichnet, dass eine visuelle Kontrolle der Einschubtiefe des Rohres 6 in den Ringspalt 9 erlaubt.

Weiterhin ist zur Erhöhung des Auszugswiderstandes des Rohres 6 die Mantelfläche des ersten Stützkörpers 7 mit umlaufenden Rippen 25 versehen.

Das zweite Anschlussende 5 des Steckverbinders 1 ist in dem dargestellten Ausführungsbeispiel als zweiter Stützkörper 21 zum Einschub in einen anzuschließenden Fitting oder in eine anzuschließende Rohrleitung ausgebildet. Auf dem zweiten Stützkörper 21 kann ein zusätzlicher Einschubbegrenzungsanschlag vorgesehen sein, als Einschubbegrenzungsanschlag kann allerdings auch der Kragen 3 dienen. Dieser muss nicht notwendigerweise auf seiner dem zweiten Stützkörper 21 zugewandten Seite außen mit einem Radius 22 versehen sein, vielmehr kann anstelle des dort vorgesehenen Radius 22 ein weiterer Ringflansch vorgesehen sein.

Der Grundkörper 2 ist bevorzugt einteilig aus Metall ausgebildet. Der zweite Stützkörper 21 dient zur Herstellung einer Pressverbindung mit dem mit dem zweiten Anschlussende 5 verbundenen Rohr.

### Bezugszeichenliste

- 1: Steckverbinder
- 2: Grundkörper
- 3: Kragen
- 4: erstes Anschlussende
- 5: zweites Anschlussende
- 6: Rohr
- 7: erster Stützkörper
- 8: Verschlussring
- 9: Ringraum
- 10: Ringflansch
- 11: O-ring
- 12.: Ringnut
- 13.: Innengewinde
- 14.: Gewindeabsatz
- 15.: Rastnut
- 16.: Rastkontur
- 17a: Abstandsring
- 17b: Klemmring
- 18: Schlitze
- 19: Krallenring
- 20: Federkrallen
- 21: zweiter Stützkörper
- 22: Radius
- 23: Absatz
- 24: Segmente
- 25: Rippen
- 26: Sichtfenster

## Patentansprüche

1. Steckverbinder für Rohrleitungen mit einem ersten und einem zweiten Anschlussende (4, 5), wobei ein erstes Anschlussende (4) als Stützkörper (7) ausgebildet ist, der Stützkörper (7) mit einem Verschlussring (8) versehen ist, der Verschlussring (8) und der Stützkörper (7) einen Ringraum (9) zur Aufnahme eines Rohrendes bilden, wobei zur klemmenden Festlegung des in den Ringraum (9) eingeschobenen Rohrendes gegen axial wirkende Auszugskräfte wenigstens ein Krallenring (19) und wenigstens ein Klemmring (17b) vorgesehen sind, wobei der Klemmring (17b) bezüglich des Verschlussrings (8) axial verschiebbar ist, **dadurch gekennzeichnet, dass** der Verschlussring (8) wenigstens einen Rastvorsprung oder -rücksprung aufweist, der als Anschlag gegen eine Rückstellbewegung des Klemmrings (17b) entgegen der Auszugsrichtung des Rohres wirkt, sodass der Klemmring (17b) axial festlegbar ist.

2. Steckverbinder nach Anspruch 1, **dadurch gekennzeichnet, dass** der Verschlussring (8) einen innen umlaufenden Absatz (23) aufweist, der in Auszugsrichtung des eingeschobenen Rohrendes einen Rücksprung bildet, der bei axialer Verschiebung des Klemmrings in Auszugsrichtung als axiale Verriegelung des Klemmrings (17b) wirkt.

3. Steckverbinder nach einem der Ansprüche 1 oder 2, **dadurch gekennzeichnet, dass** ein zweites Anschlussende zur Verpressung mit einem Einsteckende eines Metallrohrs oder mit einer muffenartig aufgeweiteten Steckaufnahme eines Metallrohrs oder mit einem metallenen Pressfitting ausgebildet ist.

4. Steckverbinder nach Anspruch 3, **dadurch gekennzeichnet, dass** das zweite Anschlussende (5) als zweiter Stützkörper (21) ausgebildet ist, der mit dem ersten Stützkörper (7) einen einstückigen Grundkörper (2) bildet.

5. Steckverbinder nach Anspruch 3, **dadurch gekennzeichnet, dass** das zweite Anschlussende (5) als Presshülse ausgebildet ist, die mit dem ersten Stützkörper (7) einen einstückigen Grundkörper (2) bildet.

6. Steckverbinder nach einem der Ansprüche 4 oder 5, **dadurch gekennzeichnet, dass** der Grundkörper (2) aus Metall, vorzugsweise aus Messing, Edelstahl oder Rotguss besteht.

7. Steckverbinder nach einem der Ansprüche 3 bis 6, **dadurch gekennzeichnet, dass** der Grundkörper (2) einen umlaufenden Kragen (3) aufweist, der den Verschlussring (8) aufnimmt und als Einschubbegrenzungsanschlag wenigstens des ersten Anschlussendes (4) dient.

8. Steckverbinder nach Anspruch 7, **dadurch gekennzeichnet, dass** der Verschlussring (8) mit dem Grundkörper (2) verschraubt oder verrastet ist.

## Claims

1. Plug-in connector for pipelines, with a first and a second connecting end (4, 5), wherein a first connecting end (4) is constructed as a supporting member (7), said supporting member (7) is provided with a locking ring (8) and said locking ring (8) and said supporting member (7) form an annular space (9) for receiving a pipe end; wherein, for the purpose of securing the pipe end inserted in the annular space (9) in position in a clamping manner against axially acting extraction forces, at least one clawed ring (19) and at least one clamping ring (17b) are provided; and wherein said clamping ring (17b) is axially displaceable with respect to the locking ring (8); **characterised in that** the locking ring (8) has at least one latching projection or latching recess which acts as a stop against a resetting movement of the clamping ring (17b) counter to the direction of extraction of the pipe, so that said clamping ring (17b) can be secured in position axially.

2. Plug-in connector according to claim 1, **characterised in that** the locking ring (8) has an internally circumferential offset (23) which forms, in the direction of extraction of the inserted pipe end, a recess which acts as an axial interlocking device for the clamping ring (17b) when the latter is displaced axially in the direction of extraction.

3. Plug-in connector according to either of claims 1 or 2, **characterised in that** a second connecting end is constructed for pressing-together with a plug-in end of a metal pipe or with a plug-in receptacle on a metal pipe, which receptacle has been expanded in a socket-like manner, or with a metal press fitting.

4. Plug-in connector according to claim 3, **characterised in that** the second connecting end (5) is constructed as a second supporting member (21) which forms, with the first supporting member (7), a one-piece base member (2).

5. Plug-in connector according to claim 3, **characterised in that** the second connecting end (5) is constructed as a press-in sleeve which forms, with the first supporting member (7), a one-piece base member (2).

6. Plug-in connector according to either of claims 4 or 5, **characterised in that** the base member (2) consists of metal, preferably of brass, high-grade steel or gunmetal.

7. Plug-in connector according to one of claims 3 to 6, **characterised in that** the base member (2) has a circumferential collar (3) which receives the locking ring (8) and serves as an insertion-limiting stop in at least the first connecting end (4).

8. Plug-in connector according to claim 7, **characterised in that** the locking ring (8) is screwed together, or latched together, with the base member (2).

## Revendications

1. Raccord à emboîtement pour des conduites présentant une première et une seconde extrémité de raccordement (4, 5), une première extrémité de raccordement (4) étant conçue comme corps de soutien (7), le corps de soutien (7) étant doté d'une bague de fermeture (8), la bague de fermeture (8) et le corps de soutien (7) formant un espace annulaire (9) pour le logement d'une extrémité de tuyau, au moins une bague à griffes (19) et au moins une bague de serrage (17b) étant prévues pour la fixation par serrage de l'extrémité de tuyau introduite dans l'espace annulaire (9) contre des forces d'extraction agissant axialement, la bague de serrage (17b) pouvant coulisser axialement par rapport à la bague de fermeture (8), **caractérisé en ce que** la bague de fermeture (8) présente au moins une saillie ou un retrait d'encliquetage, qui agit comme butée contre un mouvement de recul de la bague de serrage (17b) dans le sens contraire au sens d'extraction du tuyau, de sorte que la bague de serrage (17b) peut être fixée axialement.

2. Raccord à emboîtement selon la revendication 1, **caractérisé en ce que** la bague de fermeture (8) présente un décrochement (23) tournant à l'intérieur, qui forme, dans le sens d'extraction de l'extrémité de tuyau introduite, un retrait qui fait office de verrouillage axial de la bague de serrage (17b) lors du coulissement axial de la bague de serrage dans le sens d'extraction.

3. Raccord à emboîtement selon l'une quelconque des revendications 1 ou 2, **caractérisé en ce qu'**une seconde extrémité de raccordement est prévue pour la compression avec une extrémité d'emboîtement d'un tuyau métallique ou avec un logement d'enfichage, élargi à la façon d'un manchon, d'un tuyau métallique ou avec un accessoire de compression métallique.

4. Raccord à emboîtement selon la revendication 3, **caractérisé en ce que** la seconde extrémité de raccordement (5) est conçue comme second corps de soutien (21), qui forme un corps de base (2) d'une seule pièce avec le premier corps de soutien (7).

5. Raccord à emboîtement selon la revendication 3, **caractérisé en ce que** la seconde extrémité de raccordement (5) est conçue comme manchon de compression qui forme un corps de base (2) d'une seule pièce avec le premier corps de soutien (7).

6. Raccord à emboîtement selon l'une quelconque des revendications 4 ou 5, **caractérisé en ce que** le corps de base (2) est en métal, de préférence en laiton, acier inoxydable ou bronze rouge.

7. Raccord à emboîtement selon l'une quelconque des revendications 3 à 6, **caractérisé en ce que** le corps de base (2) présente une collerette (3) périphérique qui reçoit la bague de fermeture (8) et sert de butée de limitation d'insertion au moins de la première extrémité de raccordement (4).

8. Raccord à emboîtement selon la revendication 7, **caractérisé en ce que** la bague de fermeture (8) est vissée ou encliquetée avec le corps de base (2).
